Europäisches Patentamt

(19) European Patent Office   (11) Publication number: **0 008 594**

Office européen des brevets   **B1**

(12)   # EUROPEAN PATENT SPECIFICATION

(45) Date of publication of patent specification: **11.01.84**   (51) Int. Cl.³: **B 01 J 10/00, B 01 D 3/30, B 01 D 47/10, B 01 D 53/18, F 28 C 3/06**

(21) Application number: **78300308.0**

(22) Date of filing: **21.08.78**

(54) **Process and apparatus for the continuous counter current contact of a liquid phase with a gaseous phase and their subsequent separation.**

| | |
|---|---|
| (43) Date of publication of application:<br>**19.03.80 Bulletin 80/6** | (73) Proprietor: **Caribbean Properties Limited**<br>**P.O. Box 514**<br>**Grand Cayman British West Indies (GB)** |
| (45) Publication of the grant of the patent:<br>**11.01.84 Bulletin 84/2** | (72) Inventor: **Ross, Leon Irving**<br>**P.O. Box 514**<br>**Grand Cayman British West Indies (GB)** |
| (84) Designated Contracting States:<br>**BE CH DE FR GB LU NL SE** | (74) Representative: **Boon, Graham Anthony et al,<br>Elkington and Fife High Holborn House 52/54<br>High Holborn<br>London, WC1V 6SH (GB)** |
| (56) References cited:<br>**DE - A - 1 442 734**<br>**DE - B - 1 176 099**<br>**FR - A - 390 470**<br>**FR - A - 2 380 804**<br>**US - A - 3 233 879** | |

Courier Press, Leamington Spa, England.

# Process and apparatus for the continuous counter current contact of a liquid phase with a gaseous phase and their subsequent separation

This invention relates to a process and an apparatus for the continuous countercurrent contact of a liquid phase with a gaseous phase, and their subsequent separation from one another. Such contact may involve heat exchange, one or more chemical reactions or the physical transfer of one or more constituents from either phase into the other.

Since any interaction between the two phases depends upon their degree of physical contact with one another, the rate of such interaction will become a direct function of the area of liquid surface (or interface) exposed to the gaseous phase per unit of time. For this reason gas scrubbers, absorbers, evaporators, cooling towers, distillation columns and other types of apparatus requiring such interaction are frequently designed to augment the area of liquid surface (or interface) so exposed either by dispersing the liquid phase into the gaseous phase or by bubbling the gaseous phase through the liquid phase.

The effective capacity of such apparatus will ultimately be limited by its ability to separate the respective phases from one another after contact. The finer the droplets sprayed into the gaseous phase, the more susceptible do they become to entrainment by the gas stream. When the gaseous phase is bubbled through the liquid phase, not only can the bubbles carry the liquid phase into the gas stream as a mist but the liquid phase can also entrap the gas bubbles in the form of a foam.

This invention makes it possible not only to suppress the tendency toward such entrainment in either phase but also to separate existing suspensions of either phase from the other phase by providing a process for the continuous contact of a liquid phase with a gaseous phase and their subsequent separation from one another, the process comprising:

(a) introducing the liquid phase into a first conduit having a wall with a generally circular transverse section surrounding a central longitudinal axis, the conduit being open at one end to provide an outlet for the liquid phase therefrom, the outlet having a circular rim, centered upon the longitudinal axis of the conduit and located in a plane generally perpendicular thereto,

(b) directing the flow of the liquid phase through the first conduit axially toward and through the said circular outlet into a coaxial second conduit, also having a wall with a generally circular transverse section overlapping the wall of the first conduit, surrounding the circular outlet and defining a generally annular passage between the overlapped walls of the coaxial conduits, the annular passage having an outlet defined by the rim of the outlet from the first conduit,

(c) spinning the liquid phase emerging from the circular outlet of the first conduit around the longitudinal axis thereof fast enough to form the emerging liquid phase into a generally continuous spinning liquid ring connecting the rim of the said circular outlet directly with the overlapping wall of the second conduit thereby curtaining off the outlet from the annular passage between the overlapped walls of the coaxial conduits,

(d) introducing the gaseous phase into the annular passage between the overlapped walls of the coaxial conduits,

(e) directing the flow of the gaseous phase through the said annular passage axially toward and through the outlet thereof, the said outlet having been curtained off by the generally continuous spinning liquid ring connecting the overlapped walls of the coaxial conduits whereby the gaseous phase must be intercepted by the said spinning liquid ring, the phases consequently interacting with one another within the second conduit, the spinning phases thereafter separating centrifugally from one another, with the gaseous phase flowing toward an inner space closer to the longitudinal axis than the surrounding liquid phase,

(f) withdrawing the gaseous phase from the said inner space, and

(g) separately withdrawing the liquid phase from the second conduit.

Previous attempts to solve this entrainment problem have included (see U.S. Patent 3,233,879) the introduction of a gaseous phase through tangential inlets below the surface of a liquid phase descending through a downwardly convergent conduit so that both phases are made to spin around the vertical axis of the conduit during contact. Unfortunately, this permits a large proportion of the liquid phase to flow through the conduit without coming into contact with any of the tangential openings, so that the gaseous flow never has a chance to pass through it.

Because the gaseous phase is made to bubble through a generally continuous liquid curtain before it can rise through the circular outlet, the centrifugal acceleration of the liquid phase, which is near its maximum at the rim of the circular outlet, will tend to suppress the entrainment of mist droplets by the gas bubbles escaping radially inward from the inner surface of the spinning liquid curtain.

Mist droplets previously carried in suspension by the gaseous phase will also tend to be captured by the liquid phase during their flow through the spinning liquid curtain. The addition of a wetting agent to reduce the surface tension of the liquid phase will help to maintain the continuity of the spinning liquid curtain as its thickness is reduced in a radially outward direction and will enable it better to wet particulate matter suspended in the gaseous phase as the gaseous phase is bubbled through it.

The centrifugal acceleration of the spinning liquid curtain will also diminish the entrainment of foam by the liquid phase while previously entrained foam will tend to be carried off by the gaseous phase as it bubbles through the thin liquid curtain.

This invention also provides an apparatus for the continuous contact of a liquid phase with a gaseous phase and their subsequent separation from one another, the apparatus comprising:

(a) a first conduit having a wall with a generally circular transverse section, surrounding a central longitudinal axis, the conduit being open at one end to provide an outlet for the liquid phase therefrom, the outlet having a circular rim, centered upon the longitudinal axis of the conduit and located in a plane generally perpendicular thereto,

(b) a second conduit, coaxial with the first conduit, the second conduit also having a wall with a generally circular transverse section overlapping the wall of the first conduit, surrounding the said circular outlet for the liquid phase therefrom and defining a generally annular passage between the overlapped walls of the coaxial conduits, the annular passage having an outlet defined by the rim of the outlet from the first conduit,

(c) means for introducing the liquid phase into the first conduit,

(d) means for directing the flow of the liquid phase through the first conduit axially toward and through the said circular outlet therefrom into the overlapping coaxial second conduit,

(e) means for spinning the liquid phase emerging from the circular outlet of the first conduit around the longitudinal axis thereof fast enough to form the emerging liquid phase into a generally continuous spinning liquid ring connecting the rim of the said circular outlet directly with the overlapping wall of the second conduit thereby curtaining off the outlet from the annular passage between the overlapped walls of the coaxial conduits,

(f) means for introducing the gaseous phase into the annular passage between the overlapped walls of the coaxial conduits,

(g) means for directing the flow of the gaseous phase through the said annular passage axially toward and through the outlet thereof, the said outlet having been curtained off by the generally continuous spinning liquid ring connecting the overlapped walls of the coaxial conduits whereby the gaseous phase must be intercepted by the said spinning liquid ring, the phases consequently interacting with one another within the second conduit, the spinning phases thereafter separating centrifugally from one another, with the gaseous phase flowing toward an inner space closer to the longitudinal axis than the surrounding liquid phase,

(h) an outlet for the gaseous phase from the said inner space and

(i) a separating outlet for the liquid phase from the second conduit.

The means for introducing the liquid phase and withdrawing the gaseous phase will normally comprise an inlet for the liquid phase and an outlet for the gaseous phase but, for certain applications, other means can serve either of these functions. For example, where the vapour of the liquid phase constitutes all or part of the gaseous phase, a cooling coil or jacket around the first conduit could condense the vapour into the liquid phase, thus introducing the liquid phase into the first conduit without the necessity for a separate inlet for the liquid phase.

The means for introducing the gaseous phase and withdrawing the liquid phase will normally comprise an inlet for the gaseous phase and an outlet for the liquid phase but, for certain applications, other means can also serve either of these functions. For example, where the gaseous phase is the vapour of one of the constituents of the liquid phase or where a gas or a more volatile liquid is dissolved or colloidally dispersed in the liquid phase, a heating coil or jacket around the second conduit could drive the gas or vapour from the liquid phase into the gaseous phase, thus introducing the gaseous phase into the second conduit without the necessity for a separate inlet for the gaseous phase.

The means for spinning can be one, or any combination, of well known means such as a helical vane or channel, means for the tangential introduction of either the gaseous or the liquid phase (or both), or a rotating fan or impeller. The velocity of spin of both phases can be augmented, without significant effect upon their longitudinal velocities, by the tangential introduction, preferably into the annular passage, of the vapour of a constituent of the liquid phase at a high enough pressure through one or more appropriate nozzles.

Whenever a single unit of apparatus cannot bring the interaction between the gaseous and liquid phases to the desired degree of completion, additional units can be connected in series with one another. The fresh gaseous feed could enter the annular passage of the first unit of such a series in which the liquid feed into its first conduit could be effluent liquid discharged from the second conduit of the second unit, while the fresh liquid feed could enter the first conduit of the last unit of the series, in which the gaseous feed into its annular passage could be the gas exhausted from the inner space of the next to last unit. A similar arrangement can be used when the apparatus is to serve for the continuous fractional distillation of miscible liquids. The mixture would be continuously introduced into an intermediate unit, the more volatile fraction exhausted from the inner space of the last unit in the vapour phase, while the less volatile fraction would be continuously discharged from the second conduit of the first unit in the liquid phase.

When the primary function of the liquid phase is as a scrubbing medium for the extraction of soluble gases or other constituents from the gaseous phase, it is often advantageous for it to carry one or more surfactants or reagents capable of wetting, neutralizing or otherwise reacting with specific solid, liquid or gaseous constituents, borne by the gaseous phase. For this purpose, the presence of a wetting agent to reduce the surface tension of the liquid phase provides the extra advantage that it helps to maintain the continuity of the spinning liquid curtain formed by the liquid phase as it grows progressively thinner during its flow radially outward into the second conduit after emerging from the rim of the outlet from the first conduit.

Mist droplets suspended in the gaseous phase can best be removed in this apparatus when they are soluble in, and preferably miscible with, the liquid phase. Suspended solid particles can similarly be removed from the gaseous phase in this apparatus by converting them to such mist droplets by the condensation of the vapour of the liquid phase or of a liquid soluble in the liquid phase upon particulate nuclei suspended in the gaseous phase. This vapour can either be admitted into the gaseous phase through an appropriate inlet or evaporated from the liquid phase and recondensed closer to the axis of spin when the velocity of spin is fast enough to provide the radial temperature gradient required. Further details of this may be found in our U.S.A. Patent Specification No. 4,059,419. When the spinning mist droplets encounter the generally continuous curtain formed by the spinning liquid phase emerging from the circular outlet of the first conduit they tend to become part of the liquid curtain spinning radially outward while the relatively mist-free gaseous phase continues its inward motion toward the outlet through which it is subsequently withdrawn. The particulate nuclei upon which the vapour condenses to form these mist droplets are thereby separated from the scrubbed gaseous phase and carried off with the effluent liquid phase discharged from the second conduit.

Foams can also be broken in this apparatus, if they are continuously introduced into the first conduit through the inlet for the liquid phase, preferably at a temperature high enough to reduce the viscosity of the liquid phase to an appropriate level. The high centrifugal acceleration achievable in the vortex at the outlet of the first conduit will tend to release the entrapped gaseous phase and permit it to escape radially inward from the inner surface of the spinning liquid phase. The release of the foam will be accelerated by the continuous introduction into the annular passage of a free supply of the gaseous phase, which will help to free the entrapped gases as it bubbles through the spinning liquid curtain.

Figure 1 shows, in partly schematic form, a partly cut away vertical elevation of one embodiment of apparatus according to the invention wherein a number of individual units of such apparatus are arranged in series with one another as a single column.

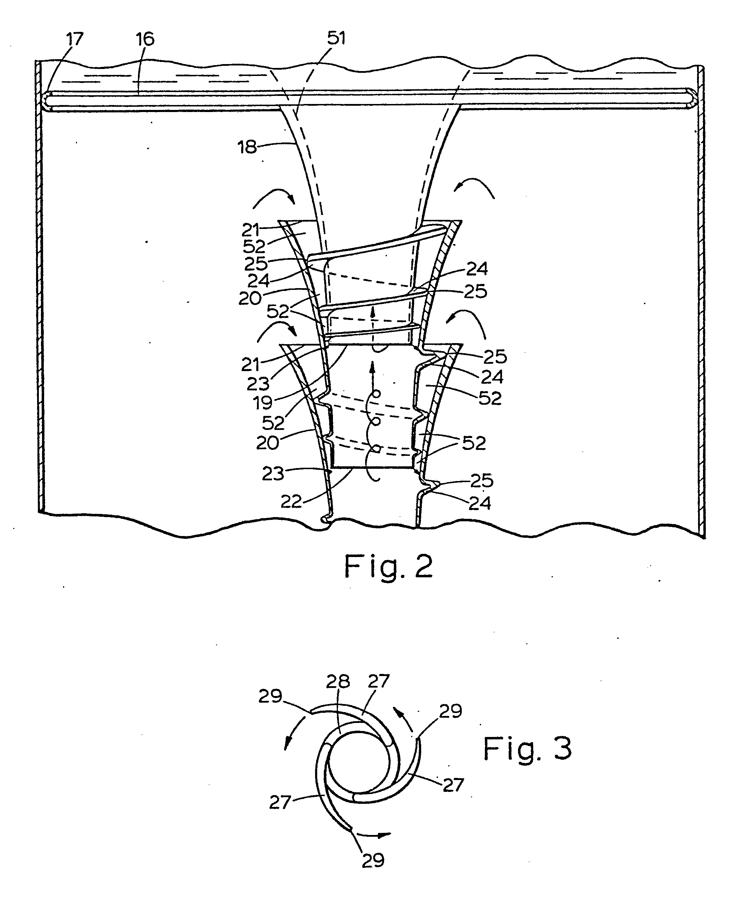

Figure 2 illustrates, on a larger scale and in greater detail, a partly cut away vertical elevation of portions of three of the funnels showing how their helical guides provide convergent passages between them for the gaseous phase, as depicted on a smaller scale in Figure 1.

Figure 3 is a plan view looking upward to the lower part of one of the liquid traps shown in Figure 1.

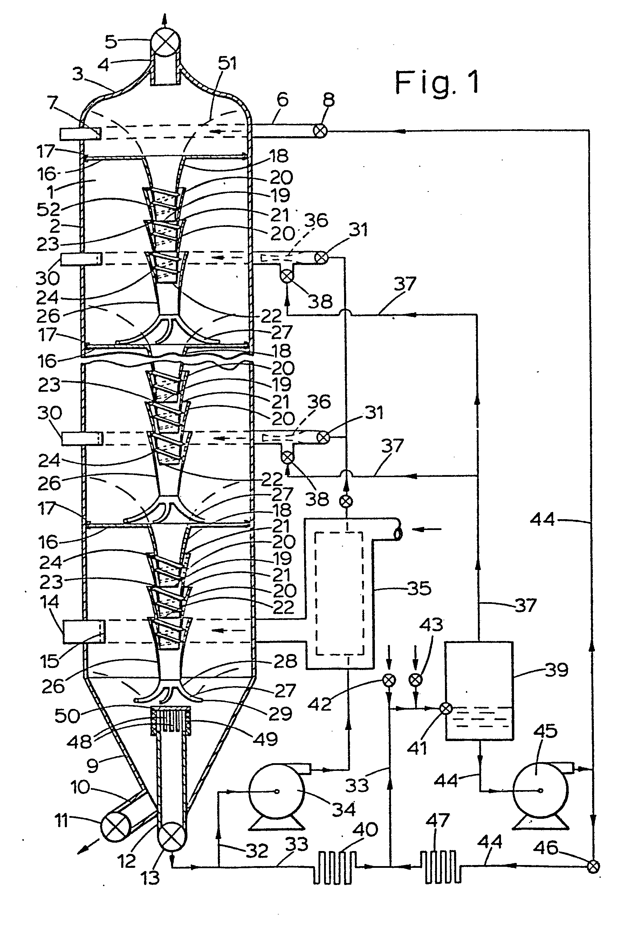

Referring to Figure 1, the apparatus comprises a generally cylindrical wall 2 defining a duct 1 with a generally vertical longitudinal axis.

The upper end of the duct 1 is closed by a top 3, except for an effluent gas outlet 4 which penetrates the centre of the top 3 and extends upward therefrom through a gaseous phase throttle valve 5.

At a level well below the mouth of the effluent gas outlet 4, a liquid phase inlet 6 is mounted tangentially to the cylindrical wall 2 and directed therethrough into the upper part of the duct 1. It is preferably mounted to embrace the wall 2 so that the wall 2 merges with the inner wall of the inlet 6, the outer wall of which forms a volute converging with it at the narrow vertical slot 7 which penetrates the wall 2 to serve as the throat of a spiral convergent nozzle to accelerate the velocity of the liquid phase introduced through the liquid feed valve 8.

The lower end of the duct 1 is closed by the bottom 9, except for a sludge outlet 10, extending outward and downward therefrom through a sludge valve 11, and an effluent liquid outlet 12, which penetrates the centre of the bottom 9 and extends downward therefrom through an effluent liquid valve 13. The top 50 of the effluent liquid outlet 12 is closed in order to direct the effluent liquid through the effluent liquid ports 48, which are vertical slots in the upper part of the wall of the effluent liquid outlet 12. The ports 48 are covered by a filter 49, in the form of a layer of porous material, to keep the larger suspended particles from accompanying the effluent liquid through the ports 48 into the outlet 12 and help to divert them toward the sludge outlet 10.

At a level well above the top 50 of the effluent liquid outlet 12, a gaseous phase inlet 14 is mounted tangentially to the cylindrical wall 2 and directed therethrough into the lower part of the duct 1 in the same direction as the liquid phase inlet 6, embracing the wall 2 with a volute converging with it at the narrow vertical slot 15 which penetrates the wall 2 and serves as the throat of a spiral convergent nozzle to accelerate the velocity of the incoming gaseous phase.

Between the levels of the liquid phase inlet 6 and the gaseous phase inlet 14, a number of generally identical transverse partitions 16 are fitted into the duct 1, to divide it into a series of separate chambers. The outer edge of each of the generally circular partitions 16 is held tightly against the wall 2 by an annular gasket 17, while each partition 16 also comprises a central conduit in the form of a funnel 18 with a generally circular cross-section coaxial with the duct 1 which converges downward to a throat 19 to form a generally horizontal central circular orifice which provides the sole communication between the chambers above and below each partition 16.

Fitted coaxially just below each of the funnels 18 are a number of generally identical conduits in the form of funnels 20, open at both ends (the mouth 21 and the throat 22), each of which serves as a baffle to guide the gaseous phase from its mouth 21 through the curtain 23 of liquid spinning outward and downward from the throat 19. The lower part of each funnel is partly corrugated in the form of a helical guide 24 whose pitch preferably diminishes progressively downward until it approaches the horizontal as it ends a short distance above the throat of the funnel. Thus the inner concave side of the guide 24 causes the liquid phase to spin progressively faster as it descends along the inside of the funnel while the outer convex side of the guide 24 rests upon the upper smooth portion of the inner wall of the funnel immediately below it where it provides a convergent helical passage through which the gaseous phase is caused to spin progressively faster as it flows between the two funnels from the mouth 21 of the lower funnel to the throat of the funnel immediately above it.

Where the funnel is not made of a flexible material, a strip of such material is preferably secured to the outer edge of the guide 24 to serve as a gasket 25 to seal the contact of the guide 24 with the inner surface of the funnel upon which it rests.

Fitted coaxially below the lowest of the funnels 20 is a liquid trap 26, generally of the same shape as the funnel 20, but closed at the bottom except for three liquid outlets in the form of hollow legs 27, which extend generally tangentially outward and downward from an annular gutter 28 at the bottom of the liquid trap 26. Each of these hollow legs 27 is preferably in the form of a volute with an internal passage converging downward toward an outlet 29 directed in a generally horizontal circumferential direction in order to augment the spin of the liquid passing from the liquid trap 26. The legs 27 form a tripod upon which the liquid trap 26 rests upon the bottom 9 of the duct 1.

An identical liquid trap 26 rests in a similar manner upon each of the partitions 16 except for the uppermost of the partitions 16. As each partition 16 is supported, through the helical guide 24 of a funnel 18, by a funnel 20 which in turn rests upon either another funnel 20 or a liquid trap 26 whose legs 27 rest upon the partition 16 below it, the weight of the entire column is supported by the bottom 9 through the legs 27 of the lowest of the liquid traps 26.

Although apparatus according to the invention can serve almost any application for the separation of a liquid phase from a gaseous phase with which it is brought into contact, the embodiment depicted in Figure 1 was designed specifically for the removal of particulate matter and other constituents from the hot products of combustion exhausted by a furnace, roaster, power plant or motor vehicle.

For this application, it is preferable for one or more vapour inlets 30 to be mounted tangentially to the cylindrical wall 2, at a level below any one or more of the partitions 16, and directed from a vapour inlet valve 31 horizontally through the wall 2 into the duct 1 in the same direction as the liquid phase inlet 6 and the gaseous phase inlet 14. The introduction of the vapour of one of the constituents of the liquid phase into the duct 1 through each of these vapour inlets 30 will serve both to accelerate the spinning of the gaseous phase without speeding up its longitudinal velocity and to wet suspended particulate matter by supersaturating the gaseous phase with that vapour (see our U.S.A. Patent Specification No. 4,059,419).

When the effluent liquid is to be recirculated, the line from the effluent liquid valve 13 is preferably divided into a liquid heating line 32 and a liquid cooling line 33.

The liquid heating line 32 leads through a boiler feed pump 34 to a boiler or heat exchanger 35 through which the gaseous phase inlet 14 passes before it opens through the wall 2 into the duct 1. The output of the boiler or heat exchanger 35 is led through the vapour inlet valves 31 into the respective vapour inlets 30 via the ejector 36 in each vapour inlet 30. A vacuum line 37 leads from each ejector 36 through a vacuum control valve 38 to an evaporator 39.

The liquid cooling line 33 leads from the effluent liquid valve 13 through a heat exchanger, cooling tower or radiator 40, in which the liquid is cooled by the atmosphere to a temperature nearer ambient, to the evaporator 39 through a liquid level control valve 41. The make-up liquid valve 42 and the reagent valve 43 are connected to the liquid cooling line 33 from sources of make-up liquid and reagents respectively.

The chilled liquid line 44 leads from the evaporator 39 through the chilled liquid pump 45 and the liquid feed valve 8 to the liquid phase inlet 6. Where a portion of the chilled liquid is required for air conditioning or refrigeration, a branch of the chilled liquid line 44 is extended through a coolant valve 46 and a heat exchanger 47 back to the liquid cooling line 33.

In operation, the liquid phase is introduced continuously into the upper part of the duct 1 through the liquid phase inlet 6 and the narrow vertical slot 7 at a rate controlled by the liquid feed valve 8. Because of the tangential configuration of the liquid phase inlet 6 and the increase in the inlet velocity induced in the liquid phase by its convergence into the slot 7, the incoming liquid phase will be directed along the inside of the wall 2, against which it will spin around the longitudinal axis of the duct 1 fast enough to form a free vortex with a surface 51 approaching the vertical at the throat 19 of the highest of the funnels 18.

After enough of the liquid phase has been introduced above the highest of the partitions 16 to narrow the inner diameter of the vortex surface 51 to that of the throat 19, the spinning liquid phase will overflow the edge of the throat 19 and spin radially outward and downward across the passage 52 between the outer surface of the funnel 18 and the inner surface of the highest of the funnels 20 in the form of a generally continuous annular liquid curtain 23 which screens the outlet of the passage 52.

The descending liquid phase continues to spin along the inner surface of the highest of the funnels 20 along which it continues its descent through the throat 22 to spin radially outward and downward across the next passage 52 between the outer surface of the highest funnel 20 and the inner surface of the next funnel 20 in the form of a second annular liquid curtain 23 to screen the outlet of that passage 52.

The descending liquid phase continues to spin along the inner surfaces of successive funnels 20 and form successive annular liquid curtains 23 across the outlets of successive passages 52 until it reaches the liquid outlets of the highest of the liquid traps 26, from whose hollow legs 27 it spins around the upper surface of the second highest of the partitions 16. Here it forms a second vortex with a second surface 51 which overflows a second throat 19 to form a second series of annular liquid curtains 23 screening the outlets of a second series of passages 52 until it reaches the liquid outlets of the next liquid trap 26, from whose hollow legs 27 it spins around the upper surface of the next partition 16.

Above the surface of each partition 16, the descending liquid phase forms another vortex which overflows another throat 19 to form another series of annular liquid curtains 23 screening the outlets of another series of passages 52 until it reaches the liquid outlets of the lowest of the liquid traps 26, from whose hollow legs 27 it spins around the bottom 9.

The spinning motion there tends to move the larger particles carried by the spinning liquid phase outward and downward toward the sludge outlet 10, while the liquid phase to be recirculated passes through the filter 49, the effluent liquid ports 48 and the effluent liquid outlet 12 at a rate regulated by the effluent liquid valve 13.

Meanwhile the gaseous phase is introduced continuously through the gaseous phase inlet 14 into the lower part of the duct 1 at a rate controlled by the gaseous phase throttle valve 5. Because of the tangential configuration of the gaseous phase inlet 14 and the increase in the inlet velocity induced in the gaseous phase by its convergence through the slot 15 the incoming gaseous phase will be spun around the vertical longitudinal axis of the duct 1 in the same direction as the liquid phase. Any suspended particulate matter that is heavy enough to be separated centrifugally will be spun against the wall 2, along which it will fall toward the sludge outlet 10, from which it will ultimately be removed through the sludge valve 13.

The spin of the gaseous phase is further augmented as it passes through the parallel group of convergent helical passages 52 from the mouth 21 of each of the funnels 20 (and of the liquid trap 26) in the chamber formed below the lowest of the partitions 16 to each of the generally continuous annular liquid curtains 23 emerging from the throats 22 of this group of funnels 20 and the throat 19 of the lowest of the funnels 18. As each spinning liquid curtain 23 screens the outlet of each passage 52, the spinning gaseous phase is obliged to bubble through it (thereby tending to become saturated with respect to the liquid phase at the temperature of the liquid curtain 23) before it can enter the throat next above it and rise through the funnel 18 countercurrently to the spinning liquid phase falling through it from the vortex above the lowest of the partitions 16.

The spinning gaseous phase continues its upward flow through the chamber above the lowest of the partitions 16 until it passes through another parallel group of convergent helical passages 52 from the mouth 21 of each of the funnels 20 (and of the liquid trap 26) below the next partition 16 to each of the generally continuous annular liquid curtains 23 screening the outlet of these passages 52. The spinning gaseous phase is then obliged to bubble through this group of liquid curtains 23 before it can rise through the next funnel 18 countercurrently to the spinning liquid phase falling through it from the vortex above the next partition 16.

The spinning gaseous phase continues to flow upward through successively higher chambers in which it passes through successively higher groups of convergent helical passages 52 screened by successively higher liquid curtains 23 through which it must bubble generally countercurrently to the falling liquid phase until it ultimately rises past the spinning liquid vortex above the highest of the partitions 16 and is discharged from the apparatus through the effluent gas outlet 4 at a rate controlled by the gaseous phase throttle valve 5.

The generally continuous countercurrent contact between the liquid and gaseous phases spinning in the same direction not only facilitates the transfer of heat, vapour, soluble substances and suspended matter from either phase to the other but it also tends to equalize the velocity of spin of the two phases. Thus, if an increase in the velocity of spin is required, it is sufficient to increase the spin of either phase, which will result in a faster spin for both.

This can readily be accomplished by the tangential introduction of vapour at a higher velocity through the vapour inlets 30, preferably mounted tangentially to the wall 2 between each partition 16 and that next above it, at rates regulated by the vapour inlet valves 31. The vapour can either be that of one of the constituents of the liquid phase or another condensible vapour or gas either soluble in the liquid phase or which will react in the apparatus to form one or more products which are so soluble.

If the apparatus is to serve to scrub particulate matter from the gaseous phase the introduction of vapour through one or more vapour inlets 30 can also help to wet the suspended particles by supersaturating the gaseous phase with vapour which will condense upon them either immediately after entry or as the supersaturated gaseous phase is cooled adiabatically during its radially inward acceleration both in the free vortex and the convergent helical passages 52. This condensation increases the weight of those suspended particles which had not been heavy enough to be readily separated centrifugally by transforming them into mist droplets which are captured from the spinning gaseous phase as it bubbles through the annular liquid curtains 23 and carried with the falling liquid phase toward the sludge outlet 10. This method of wetting suspended particulate matter is described in greater detail in our U.S.A. Patent Specification No. 4,059,419.

As the vapour condenses first upon the largest of the suspended particles, the gaseous phase rising through the funnel 18 in contact with the surface 51 of the spinning vortex of colder, fresher liquid has been stripped in the annular liquid curtains 23, of these larger particles, as well as of other constituents soluble in the liquid phase. Therefore, when the spinning gaseous phase is accelerated, supersaturated and stripped in the same manner of the largest remaining particles and other soluble constituents by the vapour inlet 30, convergent helical passages 52 and annular liquid curtains 23 in the chamber below each successively higher partition 16 it becomes progressively less contaminated until ultimately its degree of contamination can be reduced to whatever level is required by providing a sufficient number of similar chambers below successively higher partitions 16.

Since the velocity of spin and centrifugal acceleration of both the gaseous and liquid phases are at their maximum at the outlets of the convergent helical passages 52 where the gaseous phase bubbles through the generally continuous liquid curtains 23, while the relative motion in a circumferential direction between the gaseous and liquid phases is comparatively insignificant, the entrainment of mist by the gaseous phase breaking through the liquid curtains 23 can be prevented so long as the centrifugal force applied to the inner surface of each spinning liquid curtain 23 is kept greater than the frictional drag upon it by the escaping gaseous phase. By providing enough funnels 20 in each chamber so that the width of the outlets of the helical passages 52 between them is less than that required to maintain the continuity of the spinning liquid curtains 23 and by regulating the flow of the gaseous phase through the gaseous phase throttle valve 5, its velocity of escape from the spinning surfaces of the liquid curtains 23 can be maintained at a level where not only no entrainment of mist occurs but where mist droplets and even previously unwet particulate matter already suspended in the gaseous phase are captured and carried away from it by the spinning liquid phase. For the same reason foams already in suspension in the liquid phase are broken up in the spinning liquid curtains 23 by the gaseous phase bubbling through them and their gas content carried off as part of the gaseous phase.

Where the apparatus is to scrub hot gaseous products of combustion it is preferable for the clear effluent liquid being discharged through the effluent liquid valve 13 to be recirculated in two separate streams, one to be heated and vapourized and the other to be cooled and retained in the liquid phase.

The liquid to be heated is pumped at high pressure from the liquid heating line 32 through the boiler or heat exchanger 35, where its temperature is raised by the hot products of combustion entering the gaseous phase inlet 14, to the vapour inlet valves 31, through each of which it expands in the vapour phase through an ejector 36 and a vapour inlet 30. The flow of vapour through each ejector 36 creates a vacuum in the vacuum line 37 which draws additional vapour from the evaporator 39 at a rate controlled by the vacuum control valve 38. In an internal combustion engine the liquid to be heated can be preheated by being used to cool the engine before entering the boiler or heat exchanger 35.

The liquid to be cooled flows through the liquid cooling line 33 and a heat exchanger, cooling tower or radiator 40, in which it is cooled by the atmosphere to a temperature nearer ambient, to the evaporator 39 at a rate at which the level of liquid in the evaporator 39 is maintained by the liquid level control valve 41. Fresh make-up liquid is added continuously through the make-up liquid valve 42 at whatever rate is necessary to maintain a constant liquid level in the conduit 1 above the effluent liquid ports 48.

When the liquid flows through the liquid level control valve 41 into the evaporator 39, it flashes to a temperature at which its vapour pressure is equivalent to that maintained in the evaporator 39 by the vacuum control valves 38. The chilled liquid is then pumped from the evaporator 39 through the chilled liquid line 44 by the chilled liquid pump 45 to the liquid phase inlet 6 at a rate controlled by the liquid feed valve 8. Where a portion of the chilled liquid is required outside the apparatus for air conditioning or other form of refrigeration, it can be circulated through a branch of the chilled liquid line 44 leading back to the liquid cooling line 33 through a heat exchanger 47 at a rate controlled by the coolant valve 46.

The operation of the apparatus can frequently be improved by the continuous addition to the liquid phase, through the reagent valve 43, of one or more substances capable of wetting, neutralizing or otherwise affecting at least one constituent borne by the gaseous phase. For example, if the liquid phase is water or an aqueous solution, the addition of a wetting agent will not only help it to wet particulate matter carried by the gaseous phase but will help to maintain the continuity of each of the spinning liquid curtains 23 to a greater extent, which will enable the outlets of the helical passages 52 to be broadened and permit the use of fewer funnels 20 to accommodate the same gas flow. The addition of agglomerants, such as polyelectrolytes, can cause fine particles suspended in the liquid phase to coalesce into agglomerates heavy enough to be spun centrifugally toward the sludge outlet 10 instead of recirculating through the filter 49. The addition of ammonia can not only neutralize acidic constituents of the gaseous phase but its presence in the evaporator 39 can also reduce the amount of vacuum required there to maintain a given liquid temperature.

## Claims

1. A process for the continuous contact of a liquid phase with a gaseous phase and their subsequent separation from one another, the process comprising:

(a) introducing the liquid phase into a first conduit (18), having a wall with a generally circular transverse section surrounding a central longitudinal axis, the conduit (18) being open at one end to provide an outlet (19) for the liquid phase therefrom, the outlet (19) having a circular rim, centered upon the longitudinal axis of the conduit (18) and located in a plane generally perpendicular thereto,

(b) directing the flow of the liquid phase through the first conduit (18) axially toward and through the said circular outlet (19) into a coaxial second conduit (20), also having a wall with a generally circular transverse section overlapping the wall of the first conduit (18), surrounding the circular outlet (19) and defining a generally annular passage (52) between the overlapped walls of the coaxial conduits (18, 20), the annular passage (52) having an outlet defined by the rim of the outlet (19) from the first conduit (18),

(c) spinning the liquid phase emerging from the circular outlet (19) of the first conduit (18) around the longitudinal axis thereof fast enough to form the emerging liquid phase into a generally continuous spinning liquid ring (23) connecting the rim of the said circular outlet (19) directly with the overlapping wall of the second conduit (20), thereby curtaining off the outlet (19) from the annular passage (52) between the overlapped walls of the coaxial conduits (18, 20),

(d) introducing the gaseous phase into the annular passage (52) between the overlapped walls of the coaxial conduits (18, 20),

(e) directing the flow of the gaseous phase through the said annular passage (52) axially toward and through the outlet thereof, the said outlet having been curtained off by the generally continuous spinning liquid ring (23) connecting the overlapped walls of the coaxial conduits (18, 20), whereby the gaseous phase must be intercepted by the said spinning liquid ring (23), the phases consequently interacting with one another within the second conduit (20), the spinning phase thereafter separating centrifugally from one another, with the gaseous phase flowing toward an inner space closer to the longitudinal axis than the surrounding liquid phase,

(f) withdrawing the gaseous phase from the said inner space, and

(g) separately withdrawing the liquid phase from the second conduit (20).

2. A process as claimed in claim 1, in which at least part of the spinning of the liquid phase is provided by spinning the gaseous phase around the longitudinal axis of the conduits (18, 20) before the phases interact with one another.

3. A process as claimed in claim 2, in which at least part of the spinning of the gaseous phase is provided by the introduction into the second conduit (20) of a vapour in a generally circumferential direction at a higher circumferential velocity than that of the phase in that conduit (20).

4. A process as claimed in any preceding claim, in which heat is transferred from either phase into the other phase.

5. A process as claimed in any preceding claim, in which at least one constituent of either phase reacts chemically with at least one constituent of the other phase.

6. A process as claimed in any preceding claim, in which at least one constituent carried by either phase is transferred physically from that phase to the other phase.

7. A process as claimed in claim 6, in which the transfer of the constituent results from a change of phase of the constituent transferred.

8. A process as claimed in claim 6, in which the liquid phase dissolves the constituent transferred from the gaseous phase.

9. A process as claimed in claim 6, in which particulate matter in suspension in the gaseous phase is transferred to the liquid phase.

10. A process as claimed in claim 9, in which at least part of the particulate matter is wet by a liquid before its transfer to the liquid phase.

11. A process as claimed in claim 10, in which the wetting liquid is formed by the condensation of its vapour upon the surfaces of the particulate matter while in suspension in the gaseous phase.

12. A process as claimed in claim 9, in which at least part of the particulate matter transferred in suspension to the liquid phase is caused to agglomerate into larger entities by a substance carried by the liquid phase.

13. A process as claimed in any preceding claim, in which a wetting agent is carried by the liquid phase.

14. An apparatus for the continuous contact of a liquid phase with a gaseous phase and their subsequent separation from one another, the apparatus comprising:

(a) a first conduit (18) having a wall with a generally circular transverse section surrounding a central longitudinal axis, the conduit (18) being open at one end to provide an outlet (19) for the liquid phase therefrom, the outlet (19) having a circular rim, centered upon the longitudinal axis of the conduit (18) and located in a plane generally perpendicular thereto,

(b) a second conduit (20) coaxial with the first conduit (18), the second conduit (20) also having a wall with a generally circular transverse section overlapping the wall of the first conduit (18), surrounding the said circular outlet (19) for the liquid phase therefrom and defining a generally annular passage (52) between the overlapped walls of the coaxial conduits (18, 20), the annular passage (52) having an outlet defined by the rim of the outlet (19) from the first conduit (18),

(c) means (6, 7) for introducing the liquid phase into the first conduit (18),

(d) means (16) for directing the flow of the liquid phase through the first conduit (18) axially toward and through the said circular outlet (19) therefrom into the overlapping coaxial second conduit (20),

(e) means (7, 15, 24) for spinning the liquid phase emerging from the circular outlet of the first conduit (18) around the longitudinal axis thereof fast enough to form the emerging liquid phase into a generally continuous spinning liquid ring (23) connecting the rim of the said circular outlet (19) directly with the overlapping wall of the second conduit (20), thereby curtaining off the outlet (19) from the annular passage (52) between the overlapped walls of the coaxial conduits (18, 20),

(f) means (14) for introducing the gaseous phase into the annular passage between the overlapped walls of the coaxial conduits (18, 20),

(g) means for directing the flow of the gaseous phase through the said annular passage (52) axially toward and through the outlet thereof, the said outlet having been curtained off by the generally continuous spinning liquid ring (23) connecting the overlapped walls of the coaxial conduits (18, 20) whereby the gaseous phase must be intercepted by the said spinning liquid ring (23), the phases consequently interacting with one another within the second conduit (20), the spinning phases thereafter separating centrifugally from one another, with the gaseous phase flowing toward an inner space closer to the longitudinal axis than the surrounding liquid phase,

(h) an outlet (4) for the gaseous phase from the said inner space, and

(i) a separate outlet (12) for the liquid phase from the second conduit.

15. An apparatus as claimed in claim 14, in which at least part of the means for spinning the liquid phase emerging from the circular outlet (19) from the first conduit (18) comprises means (15, 24) for spinning the gaseous phase around the longitudinal axis of the conduits (18, 20) before the fluid feeds interact with one another.

16. An apparatus as claimed in claim 14, in which the second conduit has an open lower end providing an outlet (22) for the liquid phase therefrom, the outlet (22) having a circular rim, centered upon the longitudinal axis of the first conduit (18) and located in a plane generally perpendicular thereto.

17. An apparatus as claimed in claim 16, in which the second conduit (20) is connected to the first conduit (18) in the annular passage (52) between their overlapped walls by at least one guide (24) shaped to accelerate the spin of the gaseous phase around the longitudinal axis of the first conduit (18) during the flow thereof through the said annular passage (52).

18. An apparatus as claimed in claim 16 or 17, which comprises at least one additional conduit (20), coaxial with the first and second conduits (18, 20) and open at both ends, having a wall with a generally circular transverse section overlapping the wall of the said second conduit (20), surrounding the outlet (22) for the liquid phase therefrom and defining a generally annular passage (52) between the overlapped walls of the coaxial conduits (20), the annular passage (52) having an outlet defined by the rim of the outlet (22) from the said second conduit (20), the open lower end of the said additional conduit (20) providing an outlet (22) for the liquid phase therefrom, the outlet (22) having a circular rim, centered upon the longitudinal axis of the conduits (18, 20) located in a plane generally perpendicular thereto.

19. An apparatus as claimed in claim 18, in which the second conduit (20) and the additional conduit (20) are connected to one another in the annular passage (52) between their overlapped walls by at least one guide (24) shaped to accelerate the spin of the gaseous phase around the longitudinal axis of the conduits (20) during the flow thereof through the said annular passage (52).

20. An apparatus as claimed in any one of the claims 14 to 19, in which at least two units of the apparatus are connected in series with one another, whereby the gaseous phase outlet of the first unit in such a series is connected to the gaseous phase inlet of the second unit while the liquid phase outlet of the second unit is connected to the liquid phase inlet of the first unit.

21. An apparatus as claimed in any one of claims 14 to 20, in which at least one inlet (30) for the vapour of at least one constituent of the liquid phase is provided into the gaseous phase introduced into the annular passage (52) between the overlapped walls of the coaxial conduits (18, 20).

22. An apparatus as claimed in claim 21, in which the vapour inlet (30) is directed through the wall of the second conduit or additional conduit (20) in a direction to accelerate the spin of the gaseous phase around the longitudinal axis of the conduits (18, 20).

**Revendications**

1. Un procédé pour le contact continu d'une phase liquide avec une phase gazeuse et leur séparation ultérieure l'une de l'autre, procédé selon lequel:

(a) on introduit la phase liquide dans un premier conduit (18), ayant une paroi d'une section transversale de forme générale circulaire entourant un axe longitudinal central, le conduit (18) étant ouvert à une extrémité pour fournir une sortie (19) pour la phase liquide, la sortie (19) ayant un bord circulaire, centré sur l'axe longitudinal du conduit (18) et situé dans un plan généralement perpendiculaire à cet axe,

(b) on fait écouler la phase liquide à travers le premier conduit (18) axialement vers et à travers l'ouverture circulaire (19) dans un second conduit coaxial (20), ayant aussi une paroi d'une section transversale de forme générale circulaire recouvrant partiellement la paroi du premier conduit (18), entourant l'ouverture circulaire (19) et définissant un passage généralement annulaire (52) entre les parois en chevauchement des conduits coaxiaux (18, 20), le passage annulaire (52) ayant une sortie par le bord de la sortie (19) du premier conduit (18),

(c) on fait tourner la phase liquide émergeant de la sortie circulaire (19) du premier conduit (18) autour de son axe longitudinal assez vite pour mettre la phase liquide émergente sous la forme d'un anneau de liquide tournant généralement continu (23) reliant le bord de la sortie circulaire (19) directement à la paroi en chevauchement du second conduit (20), fermant ainsi la sortie (19) du passage annulaire (52) entre les parois en chevauchement des conduits coaxiaux (18, 20),

(d) on introduit la plase gazeuse dans le passage annulaire (52) entre les parois en chevauchement des conduits coaxiaux (18, 20),

(e) on dirige l'écoulement de la phase gazeuse à travers le passage annulaire (52) axialement vers et à travers sa sortie, cette sortie ayant été fermée par l'anneau de liquide tournant généralement continu (23) reliant les parois en chevauchement des conduits coaxiaux (18, 20), de sorte que la phase gazeuse doit être interceptée par l'anneau de liquide tournant (23), les phases réagissant en conséquence l'une avec l'autre dans le second conduit (20), les phases tournantes se séparant ensuite l'une de l'autre sous l'effet de la force centrifuge, la phase gazeuse s'écoulant vers un espace intérieur plus proche de l'axe longitudinal que la phase liquide environnante,

(f) on évacue la phase gazeuse dudit espace intérieur et

(g) on évacue séparément la phase liquide du second conduit (20).

2. Un procédé selon la revendication 1, dans lequel au moins une partie de la rotation de la phase liquide est effectuée en faisant tourner la phase gazeuse autour de l'axe longitudinal des conduits (18, 20) avant que les phases ne réagissent l'une avec l'autre.

3. Un procédé selon la revendication 2, dans lequel au moins une partie de la rotation de la phase gazeuse est obtenue par l'introduction dans le second conduit (20) d'une vapeur dans une direction générale circonférentielle à une plus grande vitesse circonférentielle que celle de la phase dans ce conduit (20).

4. Un procédé selon l'une quelconque des revendications précédentes, dans lequel de la chaleur est transférée d'une des phases dans l'autre phase.

5. Un procédé selon l'une quelconque des revendications précédentes, dans lequel au moins un constituant de l'une des phases réagit chimiquement avec au moins un constituant de l'autre phase.

6. Un procédé selon l'une quelconque des revendications précédentes, dans lequel au moins un constituant entraîné par l'une des phases est transféré physiquement de cette phase à l'autre phase.

7. Un procédé selon la revendication 6, dans lequel le transfert du constituant résulte d'un changement de phase du constituant transféré.

8. Un procédé selon la revendication 6, dans lequel la phase liquide dissout le constituant transféré de la phase gazeuse.

9. Un procédé selon la revendication 6, dans lequel une matière en particules en suspension dans la phase gazeuse est transférée à la phase liquide.

10. Un procédé selon la revendication 9, dans lequel au moins une partie de la matière en particules est mouillée par un liquide avant son transfert à la phase liquide.

11. Un procédé selon la revendication 10, dans lequel le liquide de mouillage est formé par la condensation de sa vapeur sur les surfaces de la matière en particules tandis qu'elle est en suspension dans la phase gazeuse.

12. Un procédé selon la revendication 9, dans lequel au moins une partie de la matière en particules transférée en suspension dans la phase liquide est agglomérée en entités plus grosses par une substance portée par la phase liquide.

13. Un procédé selon l'une quelconque des revendications précédentes, dans lequel un agent mouillant est porté par la phase liquide.

14. Un appareil pour le contact continu d'une phase liquide avec une phase gazeuse et leur séparation ultérieure l'une de l'autre, l'appareil comprenant:

(a) un premier conduit (18) ayant une paroi d'une section transversale de forme générale circulaire entourant un axe longitudinal central, le conduit (18) étant ouvert à une extrémité de façon à fournir une sortie (19) pour la phase liquide, la sortie (19) ayant un bord circulaire, centré sur l'axe longitudinal du conduit (18) et situé dans un plan généralement perpendiculaire à cet axe,

(b) un second conduit (20) coaxial au premier conduit (18), le second conduit (20) ayant aussi une paroi d'une section transversale de forme générale circulaire recouvrant partiellement la paroi du premier conduit (18), entourant la sortie circulaire (19) pour la phase liquide et définissant un passage généralement annulaire (52) entre les parois en chevauchement des conduits coaxiaux (18, 20), le passage annulaire (52) ayant une sortie définie par le bord de la sortie (19) du premier conduit (18),

(c) des moyens (6, 7) pour introduire la phase liquide dans le premier conduit (18),

(d) des moyens (16) pour diriger l'écoulement de la phase liquide à travers le premier conduit (18) axialement vers et à travers la sortie circulaire (19) dans le second conduit coaxial (20) en chevauchement,

(e) des moyens (7, 15, 24) pour faire tourner la phase liquide émergeant de la sortie circulaire du premier conduit (18) autour de l'axe longitudinal de ce conduit assez vite pour mettre la phase liquid émergente sous la forme d'un anneau de liquide tournant généralement continu (23) reliant le bord de la sortie circulaire (19) directement avec la paroi en chevauchement du second conduit (20), fermant ainsi la sortie (19) du passage annulaire (52) entre les parois en chevauchement des conduits coaxiaux (18, 20),

(f) des moyens (14) pour introduire la phase gazeuse dans le passage annulaire entre les parois en chevauchement des conduits coaxiaux (18, 20),

(g) des moyens pour diriger l'écoulement de la phase gazeuse à travers le passage annulaire (52) axialement vers et à travers sa sortie, cette sortie ayant été fermée par l'anneau de liquide tournant généralement continu (23) reliant les parois en chevauchement des conduits coaxiaux (18, 20), de façon que la phase gazeuse doive être interceptée par l'anneau de liquide tournant (23), les phases réagissant en conséquence l'une avec l'autre dans le second conduit (20), les phases tournantes se séparant ensuite l'une de l'autre sous l'action de la force centrifuge, la phase gazeuse s'écoulant vers un espace intérieur plus proche de l'axe longitudinal que la phase liquide située alentour,

(h) une sortie (4) de cet espace intérieur pour la phase gazeuse et

(i) une sortie séparée (12) pour la phase liquide du second conduit.

15. Un appareil selon la revendication 14, dans lequel au moins une partie des moyens pour faire tourner la phase liquide sortant par la sortie circulaire (19) du premier conduit (18) comprend des moyens (15, 24) pour faire tourner la phase gazeuse autour de l'axe longitudinal des conduits (18, 20) avant que les charges fluides ne réagissent l'une avec l'autre.

16. Un appareil selon la revendication 14, dans lequel le second conduit a une extrémité inférieure ouverte, fournissant une sortie (22) pour la phase liquide de ce conduit, la sortie (22) ayant un bord circulaire, centré sur l'axe longitudinal du premier conduit (18) et silué dans un plan généralement perpendiculaire à cet axe.

17. Un appareil selon la revendication 16, dans lequel le second conduit (20) est relié au premier conduit (18) dans le passage annulaire (52) entre leurs parois en chevauchement par au moins un guide (24) de forme convenable pour accélérer la rotation de la phase gazeuse autour de l'axe longitudinal du premier conduit (18) durant son écoulement à travers le passage annulaire (52).

18. Un appareil selon la revendication 16 ou 17, qui comprend au moins un conduit supplémentaire (20), coaxial au premier et au second conduit (18, 20) et ouvert aux deux extrémités, ayant une paroi d'une section transversale de forme générale circulaire recouvrant partiellement la paroi du second conduit (20), entourant la sortie (22) pour la phase liquide de ce conduit et définissant un passage généralement annulaire (52) entre les parois en chevauchement des conduits coaxiaux (20), le passage annulaire (52) ayant une sortie définie par le bord de la sortie (22) du second conduit (20), l'extrémité inférieure ouverte du conduit supplémentaire (20) fournissant une sortie (22) pour la phase liquide de ce conduit, la sortie (22) ayant un bord circulaire, centré sur l'axe longitudinal des conduits (18, 20) et situé dans un plan généralement perpendiculaire à cet axe.

19. Un appareil selon la revendication 18, dans lequel le second conduit (20) et le conduit supplémentaire (20) sont reliés l'un à l'autre dans le passage annulaire (52) entre leurs parois en chevauchement par au moins un guide (24) de forme convenable pour accélérer la rotation de la phase gazeuse autour de l'axe longitudinal des conduits (20) durant son écoulement à travers le passage annulaire (52).

20. Un appareil selon l'une quelconque des revendications 14 à 19, dans lequel au moins deux unités de l'appareil sont reliées en série l'une avec l'autre, la sortie pour la phase gazeuse de la première unité dans une telle série étant reliée à l'entrée pour la phase gazeuse de la seconde unité, tandis que la sortie pour la phase liquide de la seconde unité est reliée à l'entrée pour la phase liquide de la première unité.

21. Un appareil selon l'une quelconque des revendications 14 à 20, dans lequel au moins une entrée (30) pour la vapeur d'au moins un constituant de la phase liquide est prévue dans la phase gazeuse introduite dans le passage annulaire (52) entre les parois en chevauchement des conduits coaxiaux (18, 20).

22. Un appareil selon la revendication 21, dans lequel l'entrée pour vapeur (30) est dirigée à travers la paroi du second conduit ou du conduit supplémentaire (20) dans une direction convenable pour accélérer la rotation de la phase gazeuse autour de l'axe longitudinal des conduits (18, 20).

**Patentansprüche**

1. Verfahren für den kontinuierlichen Kontakt zwischen einer flüssigen Phase und einer gasförmigen Phase und ihre anschließende Trennung voneinander mit folgenden Merkmalen:

a) die flüssige Phase wird in eine erste Leitung (18) eingeführt, die eine eine zentrale Längsachse umgebende Wand mit einem im allgemeinen kreisförmigen Querschnitt aufweist und an einem Ende offen ist, um einen Auslaß (19) für die flüssige Phase aus ihr zu bilden, der einen kreisförmigen, auf der Längsachse der Leitung (18) zentrierten und in einer senkrecht dazu verlaufenden Ebene angeordneten Rand aufweist,

b) der Fluß der flüssigen Phase wird durch die erste Leitung (18) axial in Richtung auf und durch den kreisförmigen Auslaß (19) in eine zweite koaxiale Leitung (20) geleitet, die ebenfalls eine Wand mit einem im allgemeinen kreisförmigen Querschnitt aufweist, die die Wand der ersten Leitung (18) überlappt, den kreisförmigen Auslaß (19) umgibt und einen im allgemeinen ringförmigen Durchgang (52) zwischen den überlappten Wänden der koaxialen Leitungen (18, 20) definiert, wobei der ringförmige Durchgang (52) einen von dem Rand des Auslasses (19) aus der ersten Leitung (18) definierten Auslaß aufweist,

c) die aus dem kreisförmigen Auslaß (19) der ersten Leitung (18) austretende flüssige Phase wird um deren Längsachse schnell genug zur Rotation gebracht, um die austretende flüssige Phase in einen im allgemeinen kontinuierlichen rotierenden Flüssigkeitsring (23) zu bilden, der den Rand des kreisförmigen Auslasses (19) direkt mit der überlappenden Wand der zweiten Leitung (20) verbindet und dadurch den Auslaß von dem ringförmigen Durchgang (52) zwischen den überlappten Wänden der koaxialen Leitungen (18, 20) abschirmt,

d) die gasförmige Phase wird in den ringförmigen Durchgang (52) zwischen den überlappten Wänden der koaxialen Leitungen (18, 20) eingebracht,

e) der Strom der gasförmigen Phase wird durch den ringförmigen Durchgang (52) axial in Richtung auf und durch dessen Auslaß gerichtet, der von dem im allgemeinen kontinuierlichen rotierenden, die überlappten Wände der koaxialen Leitungen (18, 20) verbindenden Flüssigkeitsring (23) abgeschirmt ist, wodurch die gasförmige Phase von dem rotierenden Flüssigkeitsring (23) aufgefangen werden muß und die Phasen daher miteinander in der zweiten Leitung (20) wechselwirken, die rotierenden Phasen sich anschließend zentrifugal voneinander trennen, wobei die gasförmige Phase in Richtung auf einen inneren Raum fließt, der näher an der Längsachse ist als die umgebende flüssige Phase,

f) die gasförmige Phase wird von dem inneren Raum abgezogen und

g) die flüssige Phase wird von der zweiten Leitung (20) getrennt abgezogen.

2. Verfahren nach Anspruch 1, bei dem mindestens ein Teil des Rotierens der flüssigen

12

Phase dadurch bereitgestellt wird, daß die gasförmige Phase um die Längsachse der Leitungen (18, 20) rotiert wird, bevor die Phasen miteinander in Wechselwirkung treten.

3. Verfahren nach Anspruch 2, bei dem mindestens ein Teil des Rotierens der gasförmigen Phase durch das Einführen eines Dampfes in die zweite Leitung (20) etwa in Umfangsrichtung bei einer höheren Umfangsgeschwindigkeit als der der Phase in dieser Leitung (20) bereitgestellt wird.

4. Verfahren nach einem der vorhergehenden Ansprüche, bei dem Hitze von einer Phase in die andere Phase übertragen wird.

5. Verfahren nach einem der vorhergehenden Ansprüche, bei dem mindestens ein Bestandteil einer Phase chemisch mit mindestens einem Bestandteil der anderen Phase reagiert.

6. Verfahren nach einem der vorhergehenden Ansprüche, bei dem mindestens ein von einer Phase getragener Bestandteil physikalisch von dieser Phase in die andere Phase übertragen wird.

7. Verfahren nach Anspruch 6, bei dem die Übertragung des Bestandteils aus einer Phasenänderung des übertragenen Bestandteils resultiert.

8. Verfahren nach Anspruch 6, bei dem die flüssige Phase den von der gasförmigen Phase übertragenen Bestandteil auflöst.

9. Verfahren nach Anspruch 6, bei dem in der gasförmigen Phase in Suspension befindliches Partikelmaterial in die flüssige Phase übertragen wird.

10. Verfahren nach Anspruch 9, bei dem mindestens ein Teil des Partikelmaterials vor seiner Übertragung in die flüssige Phase von einer Flüssigkeit befeuchtet wird.

11. Verfahren nach Anspruch 10, bei dem die Befeuchtungsflüssigkeit durch die Kondensation ihres Dampfes auf den Oberflächen des Partikelmaterials gebildet wird, während dieses in der gasförmigen Phase in Suspension ist.

12. Verfahren nach Anspruch 9, bei dem mindestens ein Teil des in Suspension in die flüssige Phase übertragenen Partikelmaterials durch eine von der flüssigen Phase getragene Substanz veranlaßt wird, in größere Einheiten zu agglomerieren.

13. Verfahren nach einem der vorhergehenden Ansprüche, bei dem von der flüssigen Phase ein Benetzungsmittel getragen wird.

14. Vorrichtung für den kontinuierlichen Kontakt zwischen einer flüssigen Phase und einer gasförmigen Phase und ihre anschließende Trennung voneinander mit folgenden Merkmalen:

a) eine erste Leitung (18) mit einer eine zentrale Längsachse umgebenden Wand mit einem etwa kreisförmigen Querschnitt, wobei die Leitung (18) an einem Ende offen ist, um einen Auslaß (19) für die flüssige Phase aus ihr zu bilden, der einen kreisförmigen, auf der Längsachse der Leitung (18) zentrierten und in einer etwa senkrecht zu dieser verlaufende Ebene angeordneten Rand aufweist,

b) eine zweite mit der ersten Leitung (18) koaxiale Leitung (20), die ebenfalls eine Wand mit einem im allgemeinen kreisförmigen Querschnitt aufweist, die die Wand der ersten Leitung (18) überlappt, den kreisförmigen Auslaß (19) für die flüssige Phase aus ihr umgibt und einen etwa ringförmigen Durchgang (52) zwischen den überlappten Wänden der koaxialen Leitungen (18, 20) definiert, wobei der ringförmige Durchgang (52) einen von dem Rand des Auslasses (19) aus der ersten Leitung (18) definierten Auslaß aufweist,

c) Mittel (6, 7) zum Einführen der flüssigen Phase in die erste Leitung (18),

d) Mittel (16) zur Leitung des Flusses der flüssigen Phase durch die erste Leitung (18) axial in Richtung auf und durch deren kreisförmigen Auslaß (19) in die überlappende koaxiale zweite Leitung (20),

e) Mittel (7, 15, 24) zum Rotierenlassen der aus dem kreisförmigen Auslaß der ersten Leitung (18) austretenden flüssigen Phase um deren Längsachse schnell genug, um die austretende flüssige Phase in einen im allgemeinen kontinuierlichen rotierenden Flüssigkeitsring (23) zu bilden, der den Rand des kreisförmigen Auslasses (19) direkt mit der überlappenden Wand der zweiten Leitung (20) verbindet und dadurch den Auslaß (19) von dem ringförmigen Durchlaß (52) zwischen den überlappten Wänden der koaxialen Leitungen (18, 20) abschirmt,

f) Mittel (14) zum Einführen der gasförmigen Phase in den ringförmigen Durchgang zwischen den überlappten Wänden der koaxialen Leitungen (18, 20),

g) Mittel zum Leiten des Stromes der gasförmigen Phase durch den ringförmigen Durchgang (52) axial in Richtung auf und durch dessen Auslaß, der von dem im allgemeinen kontinuierlichen rotierenden, die überlappten Wände der koaxialen Leitungen (18, 20) verbindenden Flüssigkeitsring (23) abgeschirmt ist, wodurch die gasförmige Phase von dem rotierenden Flüssigkeitsring (23) aufgefangen werden muß, die Phasen daher miteinander in der zweiten Leitung (20) wechselwirken und die rotierenden Phasen sich anschließend zentrifugal voneinander trennen, wobei die gasförmige Phase in Richtung auf einen inneren Raum fließt, der näher an der Längsachse ist als die umgebende flüssige Phase,

h) einen Auslaß (4) für die gasförmige Phase aus dem inneren Raum und

i) einen getrennten Auslaß (12) für die flüssige Phase aus der zweiten Leitung.

15. Vorrichtung nach Anspruch 14, bei der mindestens ein Teil der Mittel zum Rotierenlassen der aus dem kreisförmigen Auslaß (19) aus der ersten Leitung (18) heraustretenden flüssigen Phase Mittel (15, 24) zum Rotierenlassen der gasförmigen Phase um die Längsachse der Leitungen (18, 20) aufweist, bevor die Flüssigkeitseinspeisungen miteinander wechselwirken.

16. Vorrichtung nach Anspruch 14, bei der die zweite Leitung ein offenes unteres Ende aufweist, das einen Auslaß (22) für die flüssige Phase aus ihr bildet, wobei der Auslaß (22) einen kreisförmigen, auf der Längsachse der ersten Leitung (18) zentrierten und in einer etwa senkrecht dazu verlaufenden Ebene angeordneten Rand aufweist.

17. Vorrichtung nach Anspruch 16, bei der die zweite Leitung (20) mit der ersten Leitung (18) in dem ringförmigen Durchlaß (52) zwischen ihren überlappten Wänden mit mindestens einer Führung (24) verbunden ist, die derart geformt ist, daß sie die Rotation der gasförmigen Phase um die Längsachse der ersten Leitung (18) während deren Strömens durch den ringförmigen Durchlaß (52) beschleunigt.

18. Vorrichtung nach Anspruch 16 oder 17, die mindestens eine zusätzliche koaxial zu den ersten und zweiten Leitungen (18, 20) und an beiden Enden offene Leitung (20) aufweist, die eine Wand mit einem im allgemeinen kreisförmigen Querschnitt hat, die die Wand der zweiten Leitung (20) überlappt, den Auslaß (22) für die flüssige Phase aus dieser umgibt und einen im allgemeinen ringförmigen Durchgang (52) zwischen den überlappten Wänden der koaxialen Leitungen (20) definiert, der einen von dem Rand des Auslasses (22) aus der zweiten Leitung (20) definierten Auslaß aufweist, wobei das offene untere Ende der zusätzlichen Leitung (20) einen Auslaß (22) für die flüssige Phase aus dieser zur Verfügung stellt, der einen kreisförmigen, auf der Längsachse der Leitungen (18, 20) zentrierten und in einer etwa senkrecht zu dieser verlaufenden Ebene angeordneten Rand aufweist.

19. Vorrichtung nach Anspruch 18, bei der die zweite Leitung (20) und die zusätzliche Leitung (20) miteinander in dem ringförmigen Durchgang (52) zwischen ihren überlappten Wänden mit Hilfe mindestens einer Führung (24) verbunden sind, die derart geformt ist, daß sie die Drehung der gasförmigen Phase um die Längsachse der Leitungen (20) während ihres Strömens durch den ringförmigen Durchgang (52) beschleunigt.

20. Vorrichtung nach einem der Ansprüche 14 bis 19, bei der mindestens zwei Einheiten der Vorrichtung in Reihe miteinander verbunden sind, wodurch der Auslaß für die gasförmige Phase aus der ersten Einheit in einer derartigen Reihe mit dem Einlaß für die gasförmige Phase der zweiten Einheit verbunden ist, während der Auslaß für die flüssige Phase aus der zweiten Einheit mit dem Einlaß für die flüssige Phase der ersten Einheit verbunden ist.

21. Vorrichtung nach einem der Ansprüche 14 bis 20, bei der mindestens ein Einlaß (30) für den Dampf mindestens eines Bestandteiles der flüssigen Phase in die in den ringförmigen Durchgang (52) zwischen den überlappten Wänden der koaxialen Leitungen (18, 20) eingeführte gasförmige Phase vorgesehen ist.

22. Vorrichtung nach Anspruch 21, bei der der Dampfeinlaß (30) durch die Wand der zweiten Leitung oder der zusätzlichen Leitung (20) in einer Richtung gerichtet ist, um die Drehung der gasförmigen Phase um die Längsachse der Leitungen (18, 20) zu beschleunigen.

Fig. 1

0 008 594

Fig. 2

Fig. 3